# EUROPEAN PATENT SPECIFICATION

(11) **EP 2 982 519 B1**
(45) Date of publication and mention of the grant of the patent: **30.08.2017**
(21) Application number: 14779904.3
(22) Date of filing: 01.04.2014
(51) Int. Cl.: B60C 9/18, B60C 9/22, B60C 11/00, B60C 9/20

(54) **PNEUMATIC TIRE FOR TWO-WHEELED VEHICLES**
LUFTREIFEN FÜR EIN ZWEIRÄDRIGES FAHRZEUG
PNEUMATIQUE POUR VÉHICULES DEUX-ROUES

(30) Priority: 02.04.2013 JP 2013076885
(43) Date of publication of application: 10.02.2016
(73) Proprietor: Bridgestone Corporation, Tokyo 104-8340 (JP)
(72) Inventor: KUBO, Yukihiko, Kodaira-shi Tokyo 187-8531 (JP)
(74) Representative: Oxley, Robin John George
(86) International application number: PCT/JP2014/001907
(87) International publication number: WO 2014/162731

(56) References cited:
- EP-A1- 1 918 128
- EP-A1- 2 213 481
- JP-A- S6 116 105
- JP-A- 2009 096 420
- JP-A- 2009 096 424

## Description

### TECHNICAL FIELD

This disclosure particularly relates to a motorcycle pneumatic tire that has improved grip performance when turning and that also has improved ride comfort.

### BACKGROUND

In recent years, there has been a demand for increased power and a faster top speed in racing motorbikes. Therefore, engines that generate large torque are sometimes mounted in motorbikes.

As a result, there is a demand for the tires mounted on racing motorbikes to have the durability to withstand high speeds and to have good grip performance when turning.

To meet this demand, one known motorcycle pneumatic tire is provided with a belt, in the tire tread, that includes a circumferential belt layer formed by cords extending in the tread circumferential direction and covered by rubber and a width direction belt layer, provided outward in the tire radial direction from the circumferential belt layer, formed by cords extending in the tire width direction and covered by rubber.

WO2007/058116 (PTL 1), for example, discloses providing a pneumatic tire with the above structure with comparatively hard base rubber as inner rubber among the tread rubber;

JP2009 096424 (PTL 2), discloses providing a pneumatic tire with dissimilar rubbers across the tread width in the tire tread; and

EP2213481 (PTL 3), discloses providing a pneumatic tire with dissimilar rubbers, to the left and right sides of the tire, across the tread width.

### CITATION LIST

### Patent Literature

PTL 1: WO2007/058116
PTL 2: JP2009 096424
PTL 3: EP2213481
PTL 4: EP1,918,128

### SUMMARY

### (Technical Problem)

In a conventional motorcycle pneumatic tire, the tire durability can be improved, yet the grip performance when the tire turns is insufficient.

Therefore, it could be helpful to provide a motorcycle pneumatic tire that has improved grip performance when turning and also has improved ride comfort.

### (Solution to Problem)

I attempted to improve the grip performance when a tire turns by providing cushion rubber between the belt and the tread rubber. The cushion rubber has a lower elastic modulus than the tread rubber, which is provided further outward in the tire radial direction than the belt.

In a tire in which cushion rubber was provided between the belt and the tread rubber, shear deformation of the tread became mild, thereby improving the grip performance when the tire turned. Furthermore, the cushion rubber deforms more easily than the tread rubber. Therefore, the amount of heat generated in the tread increased.

On the other hand, in a tire provided with a belt composed of a circumferential belt layer and a width direction belt layer (layered belt structure), a plurality of cord layers overlap in the tire radial direction, making it easy for heat generated in the tread to accumulate. In particular, I discovered that as compared to shoulder areas, such a tire exhibits high heat accumulation in the central area of the tread.

Therefore, by providing cushion rubber across the entire area of the tread in the tire width direction, rubber deformation increases in the central area which exhibits high heat accumulation, causing heat accumulation to progress in this area. As a result, I learned that the shear rigidity of the rubber degrades due to the rubber reaching a high temperature, and the ride comfort of the tire diminishes.

I thus conceived of limiting the area in which cushion rubber is provided between the belt and the tread rubber to an area constituting a portion of the tread in the tire width direction.

In other words, the main features of this disclosure are as follows.

An exemplary motorcycle pneumatic tire includes a belt, in a tire tread, including a circumferential belt layer formed by a plurality of cords extending in a tread circumferential direction and covered by rubber and a width direction belt layer, provided outward in a tire radial direction from the circumferential belt layer, formed by a plurality of cords extending in a tire width direction and covered by rubber; sections of cushion rubber, disposed outward in the tire radial direction from the belt, separated in the tire width direction with a tire equatorial plane therebetween; and base rubber, disposed in an area of separation (cushion rubber separation area) between the sections of cushion rubber or outward in the tire radial direction from the area of separation, having a higher elastic modulus than the cushion rubber, wherein Wn > Wb, where Wn is a length of the area of separation (length of cushion rubber separation) in a tire width direction cross-section and Wb is a length of the base rubber in a tire width direction cross-section. The tire further comprises cap rubber outward in the tire radial direction from the cushion rubber and the base rubber. The elastic modulus of the cushion rubber is 50% or more, to 95% or less, of the elastic modulus of the base rubber, and is 105% or more, to 180% or less, of the elastic modulus of the cap rubber.

This pneumatic tire improves grip performance when the tire turns and has improved ride comfort.

"Extends in the tread circumferential direction" does not strictly refer to extending in a direction parallel to the tread circumferential line, but rather refers to extending in a direction having a component in the tread circumferential direction. Similarly, "extends in the tire width direction" does not strictly refer to extending in the tire width direction, but rather refers to extending in a direction having a component in the tire width direction. The "elastic modulus" refers to the rebound resilience calculated with a Lupke rebound resilience tester in conformance with JIS K6255-1996. Furthermore, the "length Wb of the base rubber in a tire width direction cross-section" refers to the length measured along the base rubber, and the "the length Wn of cushion rubber separation in a tire width direction cross-section" refers to the length measured along the belt. The dimensions of the disclosed pneumatic tire refer to the dimensions when the tire is mounted on an applicable rim, with predetermined air pressure applied and no load applied, unless otherwise indicated. An "applicable rim" refers to a rim specified by valid industrial standards for the region in which the tire is produced or used, such as the Japan Automobile Tire Manufacturers Association (JATMA) Year Book in Japan, the European Tyre and Rim Technical Organisation (ETRTO) Standards Manual in Europe, and the Tire and Rim Association, Inc. (TRA) Year Book in the United States of America. "Predetermined air pressure" refers to air pressure (maximum air pressure) corresponding to a predetermined load in a tire of applicable size. A "predetermined load" refers to the maximum tire load in the above standards by JATMA or the like.

### (Advantageous Effect)

This motorcycle pneumatic tire has improved grip performance when the tire turns and also has improved ride comfort.

### BRIEF DESCRIPTION OF THE DRAWINGS

In the accompanying drawings:
FIG. 1 is a cross-sectional diagram in the tire width direction of an exemplary embodiment of a motorcycle pneumatic tire;
FIG. 2 is a cross-sectional diagram in the tire width direction of another exemplary embodiment of a motorcycle pneumatic tire; and
FIG. 3 is a cross-sectional diagram in the tire width direction of yet another exemplary embodiment of a motorcycle pneumatic tire.

### DETAILED DESCRIPTION

With reference to the drawings, the following describes exemplary embodiments of a motorcycle pneumatic tire.

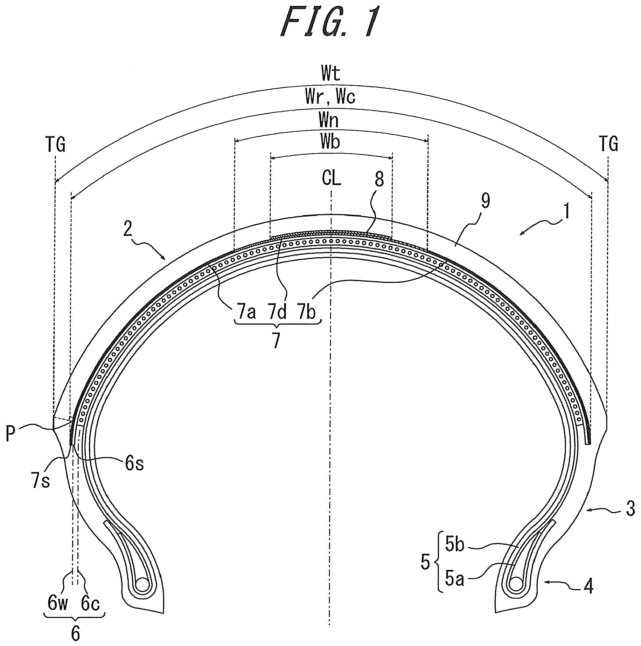

FIG. 1 is a cross-sectional diagram in the tire width direction of the tread in an exemplary embodiment of a motorcycle pneumatic tire. The motorcycle pneumatic tire 1 of this exemplary embodiment includes a tread 2, a pair of sidewalls 3 extending inward in the tire radial direction from the sides of the tread 2, and a pair of beads 4 extending inward the tire radial direction from the sidewalls 3.

The pneumatic tire 1 of this exemplary embodiment is provided with a two-ply radial carcass 5 (5a and 5b in FIG. 1) extending toroidally between the beads 4.

While FIG. 1 illustrates the case of the radial carcass 5 having two plies, the number of plies in the motorcycle pneumatic tire of this disclosure may be one, or the number may be three or more, as necessary. Furthermore, while FIG. 1 illustrates of the case of the carcass being a radial carcass, the carcass in the motorcycle pneumatic tire of this disclosure may be a bias carcass.

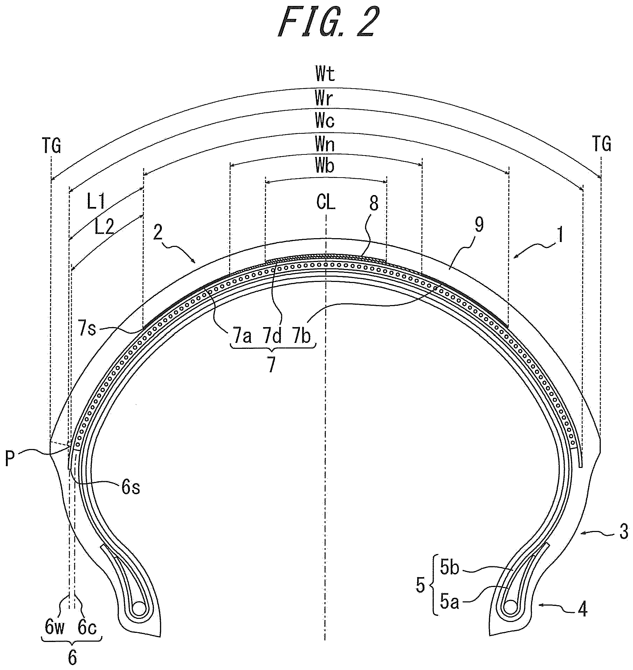

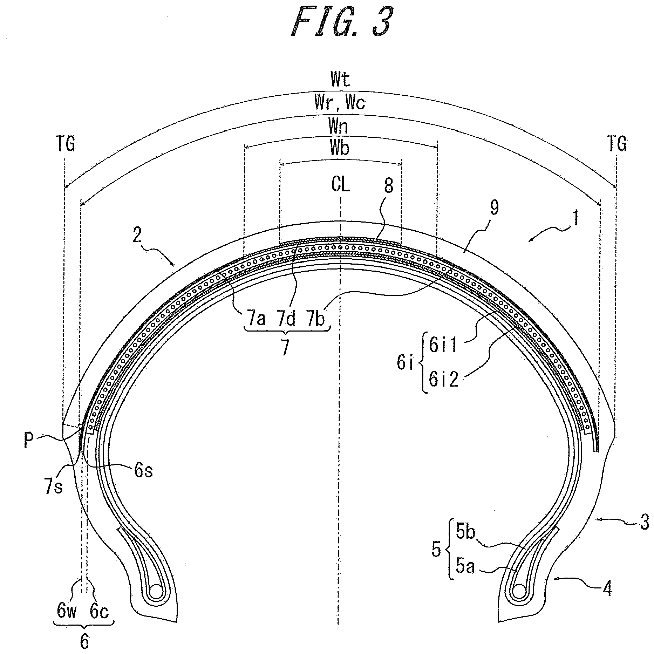

FIGS. 2 and 3 illustrate other exemplary embodiments of a motorcycle pneumatic tire. The same reference signs are used for components that are similar to the exemplary embodiment of the motorcycle pneumatic tire illustrated in FIG. 1.

The exemplary embodiment of a pneumatic tire 1 is provided with a belt 6 that includes a circumferential belt layer 6c formed by a plurality of cords disposed in parallel, extending in the tread circumferential direction and covered by rubber, and a width direction belt layer 6w, provided outward in the tire radial direction from the circumferential belt layer 6c, formed by a plurality of cords disposed in parallel, extending in the tire width direction and covered by rubber.

The cords constituting the circumferential belt layer 6c need not extend strictly in the tread circumferential direction and may, for example, be inclined at an angle of 0° to 5° with respect to the tread circumferential direction. Similarly, the cords constituting the width direction belt layer 6w need not extend strictly in the tire width direction and may, for example, be inclined at an angle of 70° to 90° with respect to the tread circumferential direction.

In this exemplary pneumatic tire 1, the belt 6 includes only the circumferential belt layer 6c and the width direction belt layer 6w, yet in the motorcycle pneumatic tire of this disclosure, as illustrated in FIG. 3, the belt 6 may further include an intersecting belt layer 6i between the radial carcass plies 5 and the circumferential belt layer 6c. The intersecting belt layer 6i includes two inclined belt layers 6i1 and 6i2, formed by a plurality of cords disposed in parallel, extending at an inclination with respect to the tread circumferential line and covered by rubber.

As illustrated in FIG. 1, sections of cushion rubber 7a and 7b are disposed outward in the tire radial direction from the belt 6. The sections of cushion rubber 7a and 7b extend from one external side in the tire width direction to the other external side, but are not provided in a predetermined area that includes the tire equatorial plane CL. In other words, the two sections of cushion rubber 7a and 7b are disposed at locations separated in the tire width direction with the tire equatorial plane CL therebetween.

Furthermore, in the area 7d that separates the sections of cushion rubber 7a and 7b (cushion rubber separation area) and outward in the tire radial direction from this area 7d, base rubber 8 having a higher elastic modulus than the cushion rubber 7 is disposed.

In the motorcycle pneumatic tire of this disclosure, the base rubber may be provided either in the cushion rubber separation area or outward in the tire radial direction from the cushion rubber separation area.

In this exemplary pneumatic tire 1, cap rubber 9 is disposed outward in the tire radial direction from the sections of cushion rubber 7a and 7b and the base rubber 8.

In this exemplary motorcycle pneumatic tire 1, the relationship Wn > Wb needs to be satisfied, where Wn is the length of cushion rubber separation and Wb is the length of the base rubber.

In general, the thickness in the tire radial direction is relatively large in a layered belt structure. Hence, this structure exhibits high heat accumulation. As the speed of the motorcycle is higher, repetition of tread warping increases. Therefore, heat easily accumulates in the central area that includes the tire equatorial plane and is in contact with the road when the motorcycle is being ridden at a high speed.

The sections of cushion rubber 7a and 7b that have a low elastic modulus are not provided in the central area (which includes the tire equatorial plane CL). Therefore, as compared to when the sections of cushion rubber 7a and 7b are provided across the entire area of the tread in the tire width direction, the amount of deformation in this area is reduced, and an increase in the amount of heat generated in this area can be suppressed. Furthermore, by providing the base rubber 8 that has a high elastic modulus and generally has a low heat accumulation in the central area, in which the sections of cushion rubber 7a and 7b are not provided, an increase in the amount of heat generated in this area can be further suppressed. Accordingly, a degradation in the rigidity of the tread due to heat can be suppressed.

On the other hand, the effect obtained by providing the cushion rubber is achieved in the shoulder areas. In other words, the shear deformation produced in the rubber positioned between the belt, which has high rigidity, and the tread surface can be made mild, and the grip performance when the tire rotates can be improved.

When providing high-elastic modulus base rubber that is highly rigid, the rigidity of the tread increases, and setting Wn > Wb yields a structure in which no cushion rubber is disposed inward from the base rubber in the tire radial direction, thus improving the ride comfort of the tire. If Wn/Wb is 1.0 or less, then low-elastic modulus cushion rubber is disposed inward from the base rubber in the tire radial direction, and the effect of improving the ride comfort of the tire is suppressed.

By providing the base rubber in the cushion rubber separation area 7d and outward from the area 7d in the tire radial direction, an increase in the amount of heat generated in the central area can be even further suppressed. A degradation, due to heat, in the ride comfort of the tire can thus be further suppressed.

In this exemplary pneumatic tire 1, Wn and Wb preferably satisfy the relationship Wn/Wb ≤ 1.8.

By setting Wn/Wb to be 1.8 or less, base rubber can be provided not only near the tire equator, but also on the outer sides of the tire equator in the tire width direction across a predetermined tire width area, thus further improving the ride comfort of the tire.

Furthermore, in another exemplary embodiment of a pneumatic motorcycle tire as illustrated in FIG. 2, when the length between the outermost edges 6s of the belt in the tire width direction (belt widthwise outermost edges), i.e. the length of the belt 6, is Wr, then the length between the outermost edge 6s of the belt in the width direction and the outermost edge 7s of the cushion rubber in the tire width direction (cushion widthwise outermost edge), i.e. the belt widthwise outermost edge-cushion widthwise outermost edge length L1 (illustrated in FIG. 2 on only one of the outer sides in the tire width direction), is preferably 0.1 Wr or less.

By setting the belt widthwise outermost edge-cushion widthwise outermost edge length L1 to be 0.1 Wr or less, the cushion rubber that has a relatively low elastic modulus can be provided up to the outer sides in the tire width direction. This improves the ground contact performance of the tire when the motorcycle on which the tire is mounted turns and further improves the grip performance of the tire when turning.

The exemplary pneumatic tire illustrated in FIG. 1 satisfies the relationship L1 ≤ 0.1 Wr, whereas the exemplary pneumatic tire illustrated in FIG. 2 satisfies the relationship L1 > 0.1 Wr.

The belt widthwise outermost edge-cushion widthwise outermost edge length L1 is preferably 0.1 Wr or less. By setting L1 to be 0.1 Wr or less, the cushion rubber that has a relatively low elastic modulus can be provided up to the outer sides in the tire width direction. This improves the ground contact performance of the tire when the motorcycle on which the tire is mounted turns and further improves the grip performance of the tire when turning.

For the same reasons as above, L1 more preferably satisfies the relationship 0 ≤ L1 ≤ 0.05 Wr.

The "length Wr of the belt in a tire width direction cross-section" refers to the longer length between the length of the circumferential belt layer and the length of the width direction belt layer. The length of each belt layer refers to the length measured along each belt layer. The "belt widthwise outermost edge" refers to whichever is further out in the tire width direction: the outermost edge of the circumferential belt layer in the tire width direction, or the outermost edge of the width direction belt layer in the tire width direction.

In the exemplary pneumatic tire illustrated in FIG. 2, the belt widthwise outermost edge 6s is further outward in the direction of extension thereof than the cushion widthwise outermost edge 7s. Conversely, in the exemplary pneumatic tire illustrated in FIG. 1, the belt widthwise outermost edge 6s is further inward in the direction of extension thereof than the cushion widthwise outermost edge 7s.

In FIG. 1 as well, however, the cushion rubber can be provided up to the outer sides in the tire width direction. Therefore, similar effects as when L1 is 0.1 Wr or less can be achieved.

Furthermore, in the exemplary embodiment of a motorcycle pneumatic tire illustrated in FIG. 2, when Wt is the length between tread ground contact edges TG, then the length between the foot P of a perpendicular from a tread ground contact edge TG to the cushion rubber 7a and the cushion widthwise outermost edge 7s, i.e. the tread ground contact edge-cushion widthwise outermost edge length L2 (illustrated in FIG. 2 on only one of the outer sides in the tire width direction) is preferably 0.1 Wt or less.

The exemplary pneumatic tire illustrated in FIG. 1 satisfies the relationship L2 ≤ 0.1 Wt, whereas the exemplary pneumatic tire illustrated in FIG. 2 satisfies the relationship L2 > 0.1 Wt.

By setting the tread ground contact edge-cushion widthwise outermost edge length L2 to be 0.1 Wt or less, the cushion rubber that has a relatively low elastic modulus can be provided up to the outer sides in the tire width direction. This improves the ground contact performance of the tire when the motorcycle on which the tire is mounted turns and further improves the grip performance of the tire when turning.

For the same reasons as above, L2 more preferably satisfies the relationship 0 ≤ L2 ≤ 0.05 Wt.

The "length Wt between tread ground contact edges in a tire width direction cross-section" refers to the length measured along the tread surface. The "tread ground contact edge-cushion widthwise outermost edge length" refers to the length between the foot of a perpendicular from a tread ground contact edge to the cushion rubber and the cushion widthwise outermost edge as measured along the cushion rubber.

In the exemplary pneumatic tire illustrated in FIG. 2, the foot P of the perpendicular is further outward in the direction of extension thereof than the cushion widthwise outermost edge 7s. Conversely, in the exemplary pneumatic tire illustrated in FIG. 1, the foot P of the perpendicular is further inward in the direction of extension thereof than the cushion widthwise outermost edge 7s.

In FIG. 1 as well, however, the cushion rubber can be provided up to the outer sides in the tire width direction. Therefore, similar effects as when L2 is 0.1 Wt or less can be achieved.

Furthermore, in this exemplary pneumatic tire 1, the elastic modulus (kcu) of the cushion rubber 7a and 7b is 50% or more to 95% or less of the elastic modulus (kb) of the base rubber 8.

By setting kcu to be 50% or more of kb, the separation between the cushion rubber and the base rubber due to input to the tire from the road surface can be suppressed. Furthermore, setting kcu to be 95% or less of kb guarantees the above effect achieved by providing cushion rubber.

For the same reasons as above, kcu is more preferably 60% or more to 75% or less of kb.

Furthermore, in this exemplary pneumatic tire 1, the elastic modulus (kcu) of the cushion rubber 7a and 7b is 105% or more to 180% or less of the elastic modulus (kca) of the cap rubber 9.

Setting kcu to be within the above range of kca, i.e. setting kcu to be 105% or more of kca yields the relationship kca < kcu (<kb), prevents degradation of tread rigidity, and suppresses degradation in driving/braking performance when the tire turns (that is, the cap rubber positioned outward in the tire radial direction thus has a low elastic modulus, preventing degradation of rigidity). Setting kcu to be 180% or less of kca allows the cushion rubber to function as a cushion and to achieve the effects obtained by providing the cushion rubber. In other words, the shear deformation produced in the rubber positioned between the belt, which has high rigidity, and the tread surface can be made mild, and the grip performance when the tire rotates can be improved.

For the same reasons as above, kcu is more preferably 140% or more to 170% or less of kca.

The motorcycle pneumatic tire of this disclosure may adopt a structure that uses one sheet of a base rubber member of a predetermined thickness, with the base rubber portion inserted into the cushion rubber separation area. This structure allows for easy manufacturing of the motorcycle pneumatic tire of this disclosure.

In the motorcycle pneumatic tire of this disclosure, the rubber provided in the cushion rubber separation area is not limited to being base rubber and may be a different rubber member instead.

The thickness Dcu of each of the sections of cushion rubber 7a and 7b is preferably 0.1 mm or more to 1.0 mm or less. Setting Dcu to 0.1 mm or more makes it easier to guarantee the effects yielded by providing the cushion rubber. Setting Dcu to 1.0 mm or less suppresses deformation of the cushion rubber and suppresses heat generated in the central area. Therefore, deterioration of rubber due to heat can be suppressed, making it even easier to guarantee durability of the tire.

The radial carcass plies 5 (5a and 5b) of this exemplary pneumatic tire 1 are formed by a plurality of ply cords that are disposed at a predetermined angle with respect to the tread circumferential direction, such as 70° to 90°, and are covered by rubber. Examples of the cords that constitute the radial carcass include textile cords (synthetic fiber cords) that have relatively high elasticity.

The cords constituting the circumferential belt layer 6c may extend along the tread circumferential line linearly, in zigzag fashion, in a wave pattern, or the like. The cords may also extend at a predetermined angle with respect to the tread circumferential direction, such as 0 to 5°, and in spiral fashion with respect to the tire width direction. Examples of the cords constituting the circumferential belt layer 6c include nylon fiber cords, aromatic polyamide fiber cords (such as Kevlar (registered trademark)), steel cords, and the like. Steel cords are particularly preferable.

Furthermore, the cords constituting the width direction belt layer 6w may extend along the tire width direction linearly, in zigzag fashion, in a wave pattern, or the like. Examples of the cords constituting the width direction belt layer 6w include nylon fiber cords, aromatic polyamide fiber cords, steel cords, and the like. Aromatic polyamide fiber cords are particularly preferable.

Furthermore, the cords constituting the inclined belt layers 6i1 and 6i2 included in the intersecting belt layer 6i may extend linearly, in zigzag fashion, in a wave pattern, or the like. These cords are disposed at a predetermined angle with respect to the tread circumferential direction, such as 60° to 90°, and are covered by rubber. Examples of the cords constituting the inclined belt layers 6i1 and 6i2 include nylon fiber cords, aromatic polyamide fiber cords, steel cords, and the like. Aromatic polyamide fiber cords are particularly preferable.

The intersecting belt layer is structured so that, for example, the inclination with respect to the tread circumferential direction of the cords in the inclined belt layer 6i1 and the inclination with respect to the tread circumferential direction of the cords in the inclined belt layer 6i2 are opposite with regard to the tread circumferential direction.

### EXAMPLES

The following provides further detail by way of examples, yet this disclosure is in no way limited to the following examples.

### (Example 1)

A pneumatic tire with the specifications listed in Table 1 was prepared, and the following evaluations were made using the pneumatic tire.

### (Comparative Example 1)

A pneumatic tire with the specifications listed in Table 1 was prepared, and the following evaluations were made using the pneumatic tire, as in Example 1.

A rim-mounted tire (test tire 1) was produced by mounting a motorcycle tire (190/650R17) onto an applicable rim (6.00) prescribed by JATMA standards. Another rim-mounted tire (test tire 2) was produced by mounting a motorcycle tire (120/600R17) onto an applicable rim (3.50) prescribed by JATMA standards. Under the conditions of predetermined internal pressure and a predetermined load, the test tire 1 was mounted onto the front wheel of a racing motorbike, and the test tire 2 was mounted onto the rear wheel.

### (1) Test of Ride Comfort

A test driver took various test drives on a dry course and subjectively evaluated the ride comfort of the tire during the test drives. Specifically, an index serving as a comparative evaluation was calculated by taking the evaluation result for Comparative Example 1 to be 100. Table 1 lists the evaluation results. A higher index indicates that the tire has better ride comfort.

### (2) Test of Grip Performance

Test drivers rode a motorbike on a dry course, entered corners and turned, and performed a subjective evaluation. The average score of the subjective evaluation by multiple drivers was calculated to assess the grip performance of the above pneumatic tire when turning on a dry road. Specifically, an index serving as a comparative evaluation was calculated by taking the evaluation result for Comparative Example 1 to be 100. A higher index indicates better grip performance when turning.

**[Table 1]**

| | | | Comparative Example 1 | Comparative Example 2 | Example 1 | Example 2 |
|---|---|---|---|---|---|---|
| Tire specifications | Tire structure | | - | FIG. 1 | FIG. 1 | FIG. 2 |
| | Carcass plies | Carcass structure | radial | radial | radial | radial |
| | | Number of layers | 2 | 2 | 2 | 2 |
| | | Cord material | nylon | nylon | nylon | nylon |
| | | Inclination angle of cords with respect to tread circumferential direction (°) | 80 | 80 | 80 | 80 |
| | Circumferential belt layer | Number of layers | 1 | 1 | 1 | 1 |
| | | Cord material | steel | steel | steel | steel |
| | | Inclination angle of cords with respect to tread circumferential direction (°) | 0 | 0 | 0 | 0 |
| | Width direction belt layer | Number of layers | 1 | 1 | 1 | 1 |
| | | Cord material | aromatic polyamide | aromatic polyamide | aromatic polyamide | aromatic polyamide |
| | | Inclination angle of cords with respect to tread circumferential direction (°) | 90 | 90 | 90 | 90 |
| Tire parameters | | Wn/Wb | 0 | 1.5 | 1.5 | 1.2 |
| | | L1/Wr | - | 0 | 0 | 0.2 |
| | | L2/Wt | - | 0 | 0 | 0.13 |
| | | kcu/kb | - | 1.1 | 0.85 | 0.85 |
| | | kcu/kca | - | 2 | 1.7 | 1.7 |
| Test of tire performance | | Ride comfort | 100 | 120 | 120 | 105 |
| | | Grip performance | 100 | 70 | 120 | 105 |

### INDUSTRIAL APPLICABILITY

This motorcycle pneumatic tire has improved grip performance when the tire turns and also has improved ride comfort.

### REFERENCE SIGNS LIST

1 Pneumatic tire
2 Tread
3 Sidewall
4 Bead
5, 5a, 5b Radial carcass
6 Belt
6c Circumferential belt layer
6w Width direction belt layer
6i Intersecting belt layer
6i1, 6i2 Inclined belt layer
6s Belt widthwise outermost edge
7 Cushion layer area
7a, 7b Cushion rubber
7d Cushion rubber separation area
7s Cushion widthwise outermost edge
8 Base rubber
9 Cap rubber
CL Tire equatorial plane
Db, Dc Rubber thickness
L1 Belt widthwise outermost edge-cushion widthwise outermost edge length
L2 Tread ground contact edge-cushion widthwise outermost edge length
Wb Length of base rubber
Wc Length of cushion layer area
Wn Length of cushion rubber separation
Wr Belt length
Wt Length between tread ground contact edges
P Foot of perpendicular
TG Tread ground contact edge

## Claims

1. A motorcycle pneumatic tire (1) comprising:
a belt (6), in a tire tread, including a circumferential belt layer (6c) formed by a plurality of cords extending in a tread circumferential direction and covered by rubber and a width direction belt layer (6w), provided outward in a tire radial direction from the circumferential belt layer (6c), formed by a plurality of cords extending in a tire width direction and covered by rubber;
sections of cushion rubber (7a, 7b), disposed outward in the tire radial direction from the belt (6), separated in the tire width direction with a tire equatorial plane (CL) therebetween; and
base rubber (8), disposed in an area of separation (7d) between the sections of cushion rubber (7a, 7b) or outward in the tire radial direction from the area of separation (7d), having a higher elastic modulus than the cushion rubber, wherein
Wn > Wb, where Wn is a length of the area of separation (7d) in a tire width direction cross-section measured along the belt (6) and Wb is a length of the base rubber (8) in a tire width direction cross-section measured along the said base rubber; **characterised in that**
the tire (1) further comprises cap rubber (9) outward in the tire radial direction from the cushion rubber (7a, 7b) and the base rubber (8); and **in that** the elastic modulus of the cushion rubber (7a, 7b) is: 50% or more to 95% or less, of the elastic modulus of the base rubber (8), and is 105% or more to 180% or less, of the elastic modulus of the cap rubber (9).

2. The motorcycle pneumatic tire (1) of claim 1, wherein Wn/Wb ≤ 1.8.

3. The motorcycle pneumatic tire (1) of claim 1 or 2, wherein in a tire width direction cross-section, a length (L1) between an outermost edge of the belt (6s) in the tire width direction and an outermost edge (7s) of the cushion rubber (7a, 7b) in the tire width direction is 0.1 Wr or less, where Wr is a length of the belt (6) in a tire width direction cross-section defined as the longer length between the length of the circumferential belt layer (6c) and the length of the width direction belt layer (6w), as measured along each belt layer respectively (6c, 6s).

4. The motorcycle pneumatic tire (1) of any one of claims 1 to 3, wherein in a tire width direction cross-section, a length, L2, between a tread ground contact edge (TG) and an outermost edge of the cushion rubber (7s) in the tire width direction is 0.1 Wt or less, where Wt is a length between tread ground contact edges (TG) in a tire width direction cross-section measured along the tread surface, and length L2 is measured as the length along the cushion rubber layer between the foot (P) of a perpendicular from a tread ground contact edge (TG) to the cushion rubber depth and the cushion rubber (7a) widthwise outermost edge (7s).

## Patentansprüche

1. Motorrad-Luftreifen (1), der Folgendes umfasst:
einen Gürtel (6), in einer Reifenlauffläche, der eine umlaufende Gürtellage (6c), gebildet durch mehrere Kords, die sich in der Reifenumfangsrichtung erstrecken und von Gummi bedeckt sind, und eine Breitenrichtung-Gürtellage (6w), die von der umlaufenden Gürtellage (6c) in einer Reifenradialrichtung nach außen bereitgestellt wird, gebildet durch mehrere Kords, die sich in einer Reifenbreitenrichtung erstrecken und von Gummi bedeckt sind, einschließt,
Sektionen von Polstergummi (7a, 7b), die von dem Gürtel (6) in der Reifenradialrichtung nach außen angeordnet sind, getrennt in der Reifenbreitenrichtung mit einer Reifenäquatorialebene (CL) zwischen denselben, und
Basisgummi (8), der in einem Trennungsbereich (7d) zwischen den Sektionen von Polstergummi (7a, 7b) oder von dem Trennungsbereich (7d) in der Reifenradialrichtung nach außen angeordnet ist, wobei er einen höheren Elastizitätsmodul hat als der Polstergummi, wobei
Wn > Wb, wobei Wn eine Länge des Trennungsbereichs (7d) in einem Querschnitt in der Reifenbreitenrichtung, gemessen entlang des Gürtels (6), ist und Wb eine Länge des Basisgummis (8) in einem Querschnitt in der Reifenbreitenrichtung, gemessen entlang des Basisgummis, ist, **dadurch gekennzeichnet, dass**
der Reifen (1) ferner einen Deckgummi (9) von dem Polstergummi (7a, 7b) und dem Basisgummi (8) in der Reifenradialrichtung nach außen umfasst, und dadurch, dass der Elastizitätsmodul des Polstergummis (7a, 7b) 50 % oder mehr bis 95 % oder weniger des Elastizitätsmoduls des Basisgummis (8) beträgt und 105 % oder mehr bis 180% oder weniger des Elastizitätsmoduls des Deckgummis (9) beträgt.

2. Motorrad-Luftreifen (1) nach Anspruch 1, wobei Wn/Wb ≤ 1,8.

3. Motorrad-Luftreifen (1) nach Anspruch 1 oder 2, wobei in einem Querschnitt in der Reifenbreitenrichtung eine Länge (L1) zwischen einer in der Reifenbreitenrichtung äußersten Kante des Gürtels (6s) und einer in der Reifenbreitenrichtung äußersten Kante (7s) des Polstergummis (7a, 7b) 0,1 Wr oder weniger beträgt, wobei Wr eine Länge des Gürtels (6) in einem Querschnitt in der Reifenbreitenrichtung ist, definiert als die längere Länge zwischen der Länge der umlaufenden Gürtellage (6c) und der Länge der Breitenrichtung-Gürtellage (6w), jeweils gemessen entlang jeder Gürtellage (6c, 6w).

4. Motorrad-Luftreifen (1) nach einem der Ansprüche 1 bis 3, wobei in einem Querschnitt in der Reifenbreitenrichtung eine Länge, L2, zwischen einer Laufflächen-Bodenberührungskante (TG) und einer in der Reifenbreitenrichtung äußersten Kante (7s) des Polstergummis 0,1 Wt beträgt, wobei Wt eine Länge zwischen Laufflächen-Bodenberührungskanten (TG) in einem Querschnitt in der Reifenbreitenrichtung, gemessen entlang der Laufflächenoberfläche, ist und die Länge L2 gemessen wird als die Länge entlang der Polstergummilage zwischen dem Fuß (P) einer Senkrechten von einer Laufflächen-Bodenberührungskante (TG) zu der Polstergummitiefe und der in der Breitenrichtung äußersten Kante (7s) des Polstergummis (7a).

## Revendications

1. Pneumatique de motocyclette (1) comprenant :
une courroie (6), dans une bande de roulement de pneu, comprenant une couche de courroie circonférentielle (6c) formée par une pluralité de câbles s'étendant dans une direction circonférentielle de la bande de roulement et recouverts par du caoutchouc et une couche de courroie dans la direction de la largeur (6w), prévue vers l'extérieur dans une direction radiale du pneu en partant de la couche de courroie circonférentielle (6c), formée par une pluralité de câbles s'étendant dans une direction de la largeur du pneu et recouverts par du caoutchouc ;
des sections de caoutchouc épaulette (7a, 7b), disposées vers l'extérieur dans la direction radiale du pneu en partant de la courroie (6), séparées dans la direction de la largeur du pneu par un plan médian de pneu (CL) entre elles ; et
un caoutchouc de base (8), disposé dans une zone de séparation (7d) entre les sections de caoutchouc épaulette (7a, 7b) ou vers l'extérieur dans la direction radiale du pneu en partant de la zone de séparation (7d), ayant un module d'élasticité plus grand que le caoutchouc épaulette, dans lequel
Wn > Wb, où Wn est une longueur de la zone de séparation (7d) dans une section transversale de la direction de la largeur du pneu mesurée le long de la courroie (6) et Wb est une longueur du caoutchouc de base (8) dans une section transversale de la direction de la largeur du pneu mesurée le long dudit caoutchouc de base ; **caractérisé en ce que**
le pneu (1) comprend en outre un caoutchouc de chape (9) vers l'extérieur dans la direction radiale du pneu en partant du caoutchouc épaulette (7a, 7b) et du caoutchouc de base (8) ; et **en ce que** le module d'élasticité du caoutchouc épaulette (7a, 7b) représente : 50 % ou plus à 95 % ou moins, du module d'élasticité du caoutchouc de base (8), et représente 105 % ou plus à 180 % ou moins, du module d'élasticité du caoutchouc de chape (9).

2. Pneumatique de motocyclette (1) selon la revendication 1, dans lequel Wn/Wb ≤ 1,8.

3. Pneumatique de motocyclette (1) selon la revendication 1 ou 2, dans lequel dans une section transversale de la direction de la largeur du pneu une longueur (L1) entre un bord extérieur de la courroie (6s) dans la direction de la largeur du pneu et un bord extérieur (7s) du caoutchouc épaulette (7a, 7b) dans la direction de la largeur du pneu est de 0,1 Wr ou moins, où Wr est une longueur de la courroie (6) dans une section transversale de la direction de la largeur du pneu définie en tant que longueur la plus grande entre la longueur de la couche de courroie circonférentielle (6c) et la longueur de la couche de courroie dans la direction de la largeur (6w), telle qu'elle est mesurée le long de chaque couche de courroie respectivement (6c, 6s).

4. Pneumatique de motocyclette (1) selon l'une quelconque des revendications 1 à 3, dans lequel dans une section transversale de la direction de la largeur du pneu une longueur, L2, entre un bord de contact avec le sol de la bande de roulement (TG) et un bord extérieur du caoutchouc épaulette (7s) dans la direction de la largeur du pneu est de 0,1 Wt ou moins, où Wt est une longueur entre les bords de contact avec le sol de la bande de roulement (TG) dans une coupe transversale dans la direction de la largeur du pneu mesurée le long de la surface de la bande de roulement, et la longueur L2 est mesurée en tant que longueur le long de la couche de caoutchouc épaulette entre le pied (P) d'une perpendiculaire en partant d'un bord de contact avec le sol de la bande de roulement (TG) vers la profondeur du caoutchouc épaulette et le bord extérieur (7s) dans le sens de la largeur du caoutchouc épaulette (7a).
